# EUROPÄISCHE PATENTSCHRIFT

(11) **EP 0 557 610 B1**
(45) Veröffentlichungstag und Bekanntmachung des Hinweises auf die Patenterteilung: **27.03.1996**
(21) Anmeldenummer: 92121549.7
(22) Anmeldetag: 18.12.1992
(51) Int. Cl.: F16L 39/04

(54) **Rohrsystem**
Pipe system
Système de tuyau

(30) Priorität: 15.02.1992 DE 4204530
(43) Veröffentlichungstag der Anmeldung: 01.09.1993
(73) Patentinhaber: ASEA BROWN BOVERI AG, CH-5401 Baden (CH)
(72) Erfinder: Laim, Meinrad, CH-5400 Ennetbaden (CH); Frey, Heinz, CH-5737 Menziken (CH)
(74) Vertreter: Kaiser, Helmut, Dr.

(56) Entgegenhaltungen:
- EP-A- 0 249 831
- DE-A- 2 525 693
- US-A- 2 366 809
- US-A- 2 490 515

## Beschreibung

### TECHNISCHES GEBIET

Die Erfindung geht aus von einem Rohrsystem für hydraulische Anlagen gemäss dem Oberbegriff des Anspruchs 1.

### STAND DER TECHNIK

Servomotoren für die Betätigung von Ventilen im Bereich der Dampfzuführung von Turbinen werden in der Regel hydraulisch angetrieben. Eine erste Rohrleitung speist das Kraftöl unter Druck in den Servomotor ein und eine zweite Rohrleitung führt das Oel aus dem Servomotor weg in den Ablauf. Die Rohrleitung für das Kraftöl wird durch eine Blechverkleidung trittsicher abgeschirmt. Diese Blechverkleidung dient auch als Brandschutz.

Bei einem Leck in der Rohrleitung für das Kraftöl kann die Blechverkleidung den Oelaustritt lediglich verzögern.

### DARSTELLUNG DER ERFINDUNG

Hier will die Erfindung Abhilfe schaffen. Die Erfindung, wie sie in den unabhängigen Ansprüchen gekennzeichnet ist, löst die Aufgabe, das bisherige Rohrleitungssystem zu verbessern im Hinblick auf Betriebssicherheit und Brandschutz, zudem soll auch der Platzbedarf verringert werden.

Die durch die Erfindung erreichten Vorteile sind im wesentlichen darin zu sehen, dass weniger Arbeitsaufwand bei der Montage des Rohrsystems in der Anlage anfällt. Ferner wirkt es sich vorteilhaft aus, dass weniger qualifiziertes Personal für die Montage eingesetzt werden kann ohne die qualitätssicherungsbezogenen Anforderungen reduzieren zu müssen.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
- Fig. 1: eine Ausführungsform der Erfindung,
- Fig. 2: eine erste Ausgestaltung der Ausführungsform gemäss Fig. 1, und
- Fig. 3: eine zweite Ausgestaltung der Ausführungsform gemäss Fig. 1.
Bei allen Figuren sind gleich wirkende Elemente mit gleichen Bezugszeichen versehen.

### WEGE ZUR AUSFÜHRUNG DER ERFINDUNG

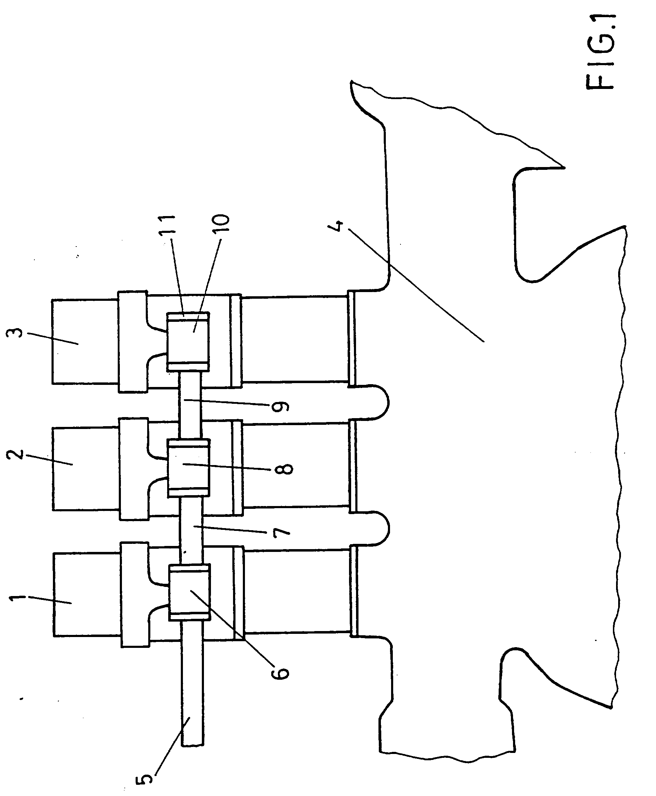

Die Fig. 1 zeigt in schematischer Darstellung Regelservomotoren 1, 2, 3, die auf einem Turbinengehäuse 4 sitzen. Die Ventilgehäuse der Ventile, die durch diese Regelservomotoren 1, 2, 3 betätigt werden, sind hier im Innern des Turbinengehäuses 4 angeordnet. Die Regelservomotoren 1, 2, 3 werden hydraulisch betätigt. Ueber eine Betätigungsleitung 5, die im Innern eine druckbeaufschlagte Zuleitung aufweist, wird Oel unter Druck für die Betätigung der Servomotoren 1, 2, 3 herangeführt. Diese Zuleitung wird von einer Abflussleitung für das die Servomotoren 1, 2, 3 verlassende und in den Ablauf fliessende Oel eingeschlossen. Anstatt der Servomotoren können auch andere hydraulische Geräte oder Gerätekombinationen gleichzeitig und parallel zueinander betätigt werden. Die aus zwei Leitungen bestehende Betätigungsleitung 5 ist an ein Anschlussteil 6 angeflanscht. Dieses Anschlussteil 6 ist als ein Teil des Regelservomotors 1 ausgebildet. Ein Zwischenstück 7, in welchem ebenfalls die Zuleitung innerhalb der Abflussleitung verläuft, verbindet das Anschlussteil 6 mit einem Anschlussteil 8, welches als ein Teil des Regelservomotors 2 ausgebildet ist. Ein weiteres, gleich wie das Zwischenstück 7 ausgebildetes, Zwischenstück 9 stellt die Verbindung zu einem Anschlussteil 10 her, welches als ein Teil des Regelservomotors 3 ausgebildet ist. Die stirnseitige Oeffnung des Anschlussteils 10 wird durch einen Endflansch 11 verschlossen, der einerseits die Abflussleitung gegen aussen verschliesst und andererseits die Zuleitung gegen die Abflussleitung abdichtet.

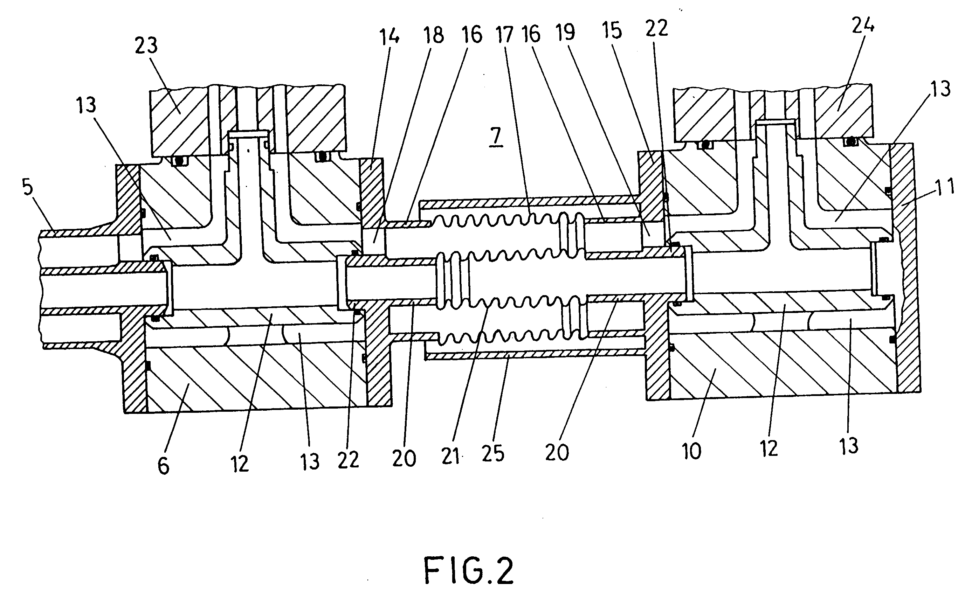

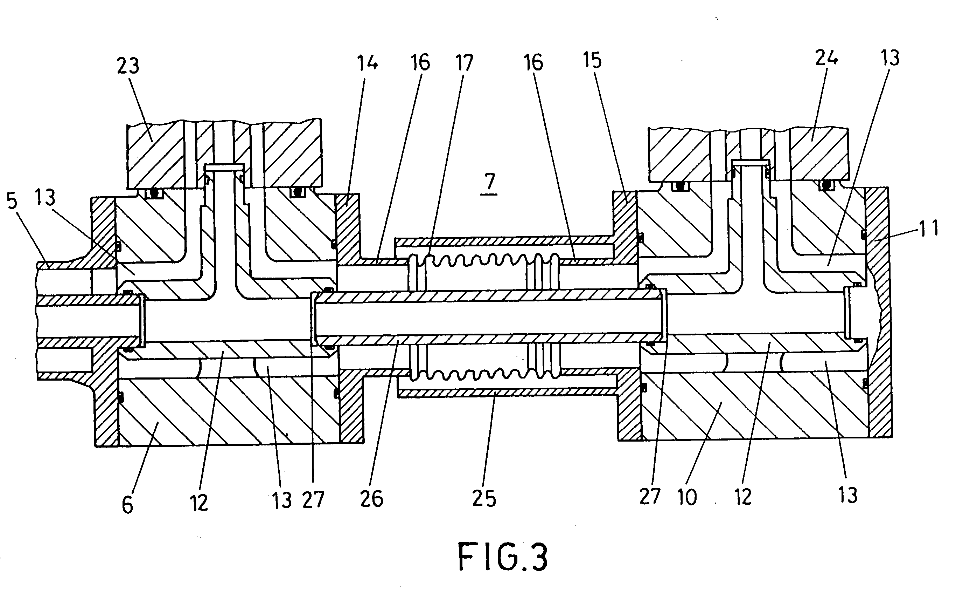

Die Anschlussteile 6, 8 und 10 werden vorteilhaft gleich bemessen und sie enthalten, wie aus den Fig. 2 und 3 ersichtlich, T-förmig ausgebildete Leitungen, von denen die innenliegende Leitung 12 als Teil der druckbeaufschlagten Zuleitung ausgebildet ist. Die aussenliegende, die innenliegende Leitung 12 umschliessende Leitung 13 ist als Teil der Abflussleitung ausgebildet. Diese Anordnung der beiden Leitungen 12, 13 wird durch die Anschlussteile 6, 8, 10 hindurch bis in die hydraulisch betätigbaren Geräte, wie hier z.B. in die Regelservomotoren 1, 2, 3 beibehalten, wo durch das eingespeiste Oel unter Druck in der Regel eine Kolben-Zylinder-Anordnung betätigt wird. Durch diese konsequent beibehaltene Führung der druckbeaufschlagten Zuleitung wird sichergestellt, dass etwaige Leckagen in dieser Zuleitung keine grossen Folgeschäden in der Anlage, wie beispielsweise Brände, auslösen können.

In den Fig. 2 und 3 sind Anschlussteile 6 und 10 zu sehen, bei denen die innenliegende Leitung 12 einstückig in das jeweilige der Anschlussteile eingegossen ist. Es ist jedoch möglich, diese innere Leitung 12 auch aus entsprechenden Rohrteilen druckdicht zusammenzustecken und diese Leitung dann in dem jeweiligen Anschlussteil zu fixieren.

Benachbarte Anschlussteile werden durch Zwischenstücke 7 und 9 miteinander verbunden. Diese Zwischenstücke 7, 9 sind so ausgebildet, dass sie in diesem Bereich unvermeidbare Fertigungstoleranzen und/oder Wärmedehnungen sowohl in axialer als auch etwas in radialer Richtung ausgleichen können. Diese Zwischenstücke 7, 9 können ein oder zweiteilig ausgeführt werden. In Fig. 2 ist ein einstückig ausgebildetes Zwischenstück 7 dargestellt, welches die Anschlussteile 6 und 10 druckdicht miteinander verbindet. Das Zwischenstück 7 weist zwei Flansche 14, 15 an den Enden auf. An jedem der Flansche ist ein äusserer Rohrstutzen 16 angeschweisst. Die Enden der beiden Rohrstutzen 16 sind mittels eines druckdicht verschweissten, elastischen Stahlbalges 17 verbunden. In den Flanschen 14, 15 sind Durchbrüche 18, 19 vorgesehen, die ein Durchströmen des Oeles in den Ablauf erlauben. Im Zentrum der Flansche 14, 15 sind weitere Rohrstutzen 20 vorgesehen, die innerhalb der äusseren Rohrstutzen 16 liegen. Die Enden der beiden Rohrstutzen 20 sind mittels eines druckdicht verschweissten, elastischen Stahlbalges 21 miteinander verbunden. Die so gebildete Leitung ist Teil der Zuleitung für das Oel unter Druck.

Die Flansche 14 und 15 sind mit den entsprechenden Anschlussteilen 6 und 10 druckdicht verschraubt. Auf bekannte Art angeordnete Dichtringe, die hier nicht näher beschrieben werden sollen, stellen diese Dichtigkeit sicher. Die Flansche 14 und 15 sind im Zentrum zudem mit Stutzen 22 versehen, die in die innenliegenden Leitungen 12 der Anschlussteile 6 und 10 hineinragen und mittels Dichtungsringen druckdicht mit diesen Leitungen 12 verbunden sind. Die Stutzen 22 sind so lang ausgebildet, dass die Dichtigkeit auf jeden Fall gewährleistet ist. Die Flanschverbindung zwischen dem Anschlussteil 6 und einem Gehäuse 23 des zugeordneten Regelservomotors ist ebenfalls mittels eines Dichtringes abgedichtet, ebenso die entsprechende Verbindung zwischen dem Anschlussteil 10 und einem Gehäuse 24 des entsprechenden Regelservomotors.

Die Betätigungsleitung 5 ist mechanisch hinreichend stabil ausgeführt, sodass eine Beschädigung dieser Leitung unter normalen Umständen nahezu ausgeschlossen ist. Die innenliegende Zuleitung für das Oel unter Druck ist demnach ebenfalls gut geschützt. Als einzige mechanische Schwachstelle in diesem Rohrleitungssystem verbleibt der Stahlbalg 17 im Zwischenstück 7. Um auch hier einen guten Schutz gegen mechanische Beschädigungen zu erreichen, ist ein Schutzrohr 25 vorgesehen, welches mit dem Flansch 15 verbunden ist und welches diesen Stahlbalg 17 abdeckt.

Die Anordnung gemäss Fig. 3 unterscheidet sich von der nach Fig. 2 lediglich dadurch, dass das Zwischenstück 7 aus zwei Teilen besteht. Die Zuleitung wird durch das Zwischenstück 7 in einem separaten Rohr 26 geführt, welches nicht mit den Flanschen 14, 15 verbunden ist. Die Enden dieses Rohres 26 ragen in die innenliegenden Leitungen 12 der Anschlussteile 6 und 10 hinein und sind mittels Dichtringen druckdicht mit diesen Leitungen 12 verbunden. Ein Anschlag 27 innerhalb der Leitungen 12 verhindert, dass das Rohr 26 verrutschen kann, sodass die Dichtigkeit auf jeden Fall gewährleistet ist.

Zur Erläuterung der Wirkungsweise werden die Figuren etwas näher betrachtet. Durch die innere, als Zuleitung ausgebildete Leitung der Betätigungsleitung 5 strömt Oel unter Druck in die innenliegende Leitung 12 des Anschlussteils 6 und weiter durch das Zwischenstück 7 in die innenliegende Leitung 12 des Anschlussteils 10. Der Endflansch 11 verhindert ein Weiterströmen des Oels in diesem Leitungszug. Der Druck in den innenliegenden Leitungen 12 verursacht eine Oelstrom in den jeweils abzweigenden Teil der Leitung 12 in die Gehäuse 23 und 24 hinein. Das Oel unter Druck wird bis in eine nicht dargestellte Zylinder-Kolben-Anordnung der entsprechenden Servomotoren geführt und bewegt den Kolben, wodurch die Stellung des durch den jeweiligen Servomotor geregelten Ventils verändert wird. Das die Zylinder-Kolben-Anordnung verlassende Oel wird durch die Abflussleitung, welche die Zuleitung für das Oel unter Druck umgibt, in das jeweilige Gehäuse 23, 24 und weiter in die aussenliegende Leitung 13 in den Anschlussgehäusen 6, 10 geleitet. Von dort fliesst das Oel, zum Teil durch die Durchbrüche 18, 19 und das Zwischenstück 7, weiter in die aussenliegende Abflussleitung der Betätigungsleitung 5. Durch diese Leitung 5 wird das Oel in den Ablauf geführt.

Dieses Rohrleitungssystem bietet besonders bei der Betätigung von Regelservomotoren im Bereich von Dampfturbinen ein hohes Mass an Betriebssicherheit.

## Patentansprüche

1. Rohrsystem für hydraulische Anlagen mit einer druckbeaufschlagten Zuleitung und einer Abflussleitung für eine hydraulische Flüssigkeit und mit Anschlussteilen (6, 8, 10) für den Anschluss eines hydraulisch betätigbaren Geräts an die Zu- und Abflussleitung, dadurch gekennzeichnet
- dass die druckbeaufschlagte Zuleitung im Innern der Abflussleitung angeordnet ist, und
- dass diese Anordnung durch die Anschlussteile (6, 8, 10) hindurch beibehalten wird.

2. Rohrsystem nach Anspruch 1, dadurch gekennzeichnet,
- dass in die Anschlussteile (6, 8, 10) T-förmig ausgebildete Leitungen (12, 13) eingelassen sind, von denen die innenliegende Leitung (12) als Teil der druckbeaufschlagten Zuleitung ausgebildet ist, und
- dass die innenliegende Leitung (12) einstückig in das Anschlussteil (6, 8, 10) eingegossen ist oder aus mehreren, druckdicht zusammengesteckten und im Anschlussteil (6, 8, 10) fixierten Rohrteilen aufgebaut ist.

3. Rohrsystem nach Anspruch 2, dadurch gekennzeichnet,
- dass benachbarte Anschlussteile (6, 8, 10) mittels Zwischenstücken (7, 9) verbindbar ausgebildet sind, und
- dass diese Zwischenstücke (7, 9) für die Kompensation von Fertigungstoleranzen und/oder Wärmedehnungen ausgelegt sind.

4. Rohrsystem nach Anspruch 3, dadurch gekennzeichnet,
- dass das Zwischenstück (7, 9) ein- oder zweiteilig ausgeführt ist.

5. Rohrsystem nach Anspruch 4, dadurch gekennzeichnet,
- dass beim einteilig ausgeführten Zwischenstück (7, 9) sowohl das Rohr für die druckbeaufschlagte Zuleitung als auch das dieses umgebende Rohr für die Abflussleitung mit einem elastischen Stahlbalg (17, 21) versehen ist, und
- dass beide Rohre an ihren beiden Enden mit einem Flansch (14, 15) für die mechanische Verbindung mit den Anschlussteilen (6, 10) verbunden sind.

6. Rohrsystem nach Anspruch 4, dadurch gekennzeichnet,
- dass beim zweiteilig ausgeführten Zwischenstück (7) die innenliegende, druckbeaufschlagte Zuleitung als starres Rohr (26) ausgebildet ist, welches in entsprechende Aufnahmen der jeweils benachbarten Anschlussteile (6, 10) druckdicht eingeschoben ist, und
- dass das aussenliegende Rohr für die Abflussleitung mit einem elastischen Stahlbalg (17) und an beiden Enden mit einem Flansch (14, 15) für die mechanische Verbindung mit den Anschlussteilen (6, 10) versehen ist.

7. Rohrsystem nach einem der Ansprüche 5 oder 6, dadurch gekennzeichnet,
- dass das Rohr für die Abflussleitung durch ein Schutzrohr (25) gegen Beschädigungen geschützt ist, wobei das Schutzrohr (25) mit einem der Flansche (15) starr verbunden ist.

8. Rohrsystem nach Anspruch 7, dadurch gekennzeichnet,
- dass das Schutzrohr (25) zylindrisch ausgebildet ist.

## Claims

1. Pipe system for hydraulic installations with a pressurized feed conduit and an outflow conduit for a hydraulic fluid and with connection parts (6, 8, 10) for the connection of a hydraulically actuable device to the feed and outflow conduit, characterized in that
- the pressurized feed conduit is arranged inside the outflow conduit and
- in that this arrangement is maintained right through the connection parts (6, 8, 10).

2. Pipe system according to Claim 1, characterized in that
- conduits (12, 13) of T-shaped design are let into the connection parts (6, 8, 10), of which conduits the inner conduit (12) is designed as part of the pressurized feed conduit and
- in that the inner conduit (12) is cast integrally into the connection part (6, 8, 10) or is constructed from a plurality of pressure-tightly assembled pieces of tube fixed in the connection part (6, 8, 10).

3. Pipe system according to Claim 2, characterized in that
- adjacent connection parts (6, 8, 10) are designed to be connectable by means of intermediate pieces (7, 9) and
- in that these intermediate pieces (7, 9) are designed to compensate manufacturing tolerances and/or thermal expansions.

4. Pipe system according to Claim 3, characterized in that
- the intermediate piece (7, 9) is of one- or two-part design.

5. Pipe system according to Claim 4, characterized in that
- in the case of the intermediate piece (7, 9) of one-part design, both the tube for the pressurized feed conduit and the tube surrounding the latter for the outflow conduit are provided with an elastic steel bellows (17, 21) and
- in that both tubes are connected at both ends to a flange (14, 15) for the mechanical connection to the connection parts (6, 10).

6. Pipe system according to Claim 4, characterized in that
- in the case of the intermediate piece (7) of two-part design, the inner, pressurized feed conduit is designed as a rigid tube (26) which is inserted pressure-tightly into corresponding sockets of the respectively adjacent connection parts (6, 10) and
- in that the outer tube for the outflow conduit is provided with an elastic steel bellows (17) and with a flange (14, 15) at both ends for the mechanical connection to the connection parts (6, 10).

7. Pipe system according to either of Claims 5 or 6, characterized in that
- the tube for the outflow conduit is protected against damage by a protective tube (25), the protective tube (25) being rigidly connected to one of the flanges (15).

8. Pipe system according to Claim 7, characterized in that
- the protective tube (25) is of cylindrical design.

## Revendications

1. Système de conduites pour des installations hydrauliques avec une conduite d'alimentation sous pression et une conduite d'évacuation pour un liquide hydraulique et avec des pièces de raccordement (6, 8, 10) pour le raccordement d'un appareil à commande hydraulique aux conduites d'alimentation et d'évacuation, caractérisé en ce que
- la conduite d'alimentation sous pression est disposée à l'intérieur de la conduite d'évacuation, et en ce que
- cette disposition est conservée à travers les pièces de raccordement (6, 8, 10).

2. Système de conduites suivant la revendication 1, caractérisé en ce que
- dans les pièces de raccordement (6, 8, 10) sont insérées des conduites en T (12, 13), dont la conduite intérieure (12) constitue une partie de la conduite d'alimentation sous pression, et en ce que
- la conduite intérieure (12) est coulée d'une seule pièce dans la pièce de raccordement (6, 8, 10) ou est composée de plusieurs éléments tubulaires introduits l'un dans l'autre de façon étanche à la pression et fixés dans la pièce de raccordement 6, 8, 10).

3. Système de conduites suivant la revendication 2, caractérisé en ce que
- des pièces de raccordement voisines (6, 8, 10) peuvent être reliées au moyen de pièces intermédiaires (7, 9), et en ce que
- ces pièces intermédiaires (7, 9) sont conçues de façon à compenser des tolérances de fabrication et/ou des dilatations thermiques.

4. Système de conduites suivant la revendication 3, caractérisé en ce que
- la pièce intermédiaire (7, 9) est réalisée en une seule ou en deux pièces.

5. Système de conduites suivant la revendication 4, caractérisé en ce que
- pour une pièce intermédiaire (7, 9) réalisée en une seule pièce, aussi bien le tube pour la conduite d'alimentation sous pression que le tube pour la conduite d'évacuation entourant ce dernier est pourvu d'un soufflet élastique en acier (17, 21), et en ce que
- les deux tubes sont reliés à leurs deux extrémités à une bride (14, 15) pour l'assemblage mécanique avec les pièces de raccordement (6, 10).

6. Système de conduites suivant la revendication 4, caractérisé en ce que
- pour une pièce intermédiaire (7) réalisée en deux pièces, la conduite intérieure d'alimentation sous pression est constituée par un tube rigide (26), qui est inséré de façon étanche à la pression dans des logements correspondants des pièces de raccordement voisines respectives (6, 10), et en ce que
- le tube extérieur pour la conduite d'évacuation est pourvu d'un soufflet élastique en acier (17) et à ses deux extrémités d'une bride (14, 15) pour l'assemblage mécanique avec les pièces de raccordement (6, 10).

7. Système de conduites suivant l'une des revendications 5 ou 6, caractérisé en ce que
- le tube pour la conduite d'évacuation est protégé contre les dommages par un tube de protection (25), le tube de protection (25) étant assemblé de façon rigide à l'une des brides (15).

8. Système de conduites suivant la revendication 7, caractérisé en ce que
- le tube de protection (25) est cylindrique.
